# EUROPEAN PATENT SPECIFICATION

(11) **EP 1 021 121 B1**
(45) Date of publication and mention of the grant of the patent: **12.06.2002**
(21) Application number: 98938458.1
(22) Date of filing: 07.08.1998
(51) Int. Cl.: A47L 13/16, A47L 13/17, D04H 13/00

(54) **WIPE ARTICLE HAVING A SCRIM LAYER AND A THREE DIMENSIONAL WIPING SURFACE**
WISCHTUCH MIT NETZSCHICHT UND DREIDIMENSIONALER WISCHOBERFLÄCHE
ARTICLE D'ESSUYAGE MUNI D'UNE COUCHE DE GAZE ET D'UNE SURFACE D'ESSUYAGE EN TROIS DIMENSIONS

(30) Priority: 12.08.1997 US 55326 P
(43) Date of publication of application: 26.07.2000
(73) Proprietor: THE PROCTER & GAMBLE COMPANY, Cincinnati, Ohio 45202 (US)
(72) Inventor: FERESHTEHKHOU, Saeed, Cincinnati, OH 45243 (US); MARTINI, Scott, Alan, Cincinnati, OH 45247 (US); HANSER, Thomas, Robert, Taylor Mill, KY 41015 (US)
(74) Representative: Kohol, Sonia
(86) International application number: US9816515
(87) International publication number: WO9907273

(56) References cited:
- EP-A- 0 696 432
- GB-A- 1 331 817
- JP-A- 5 056 902
- JP-A- 6 014 859
- US-A- 3 965 518
- US-A- 5 310 590
- US-A- 5 525 397
- PATENT ABSTRACTS OF JAPAN vol. 014, no. 250 (C-0723), 29 May 1990 & JP 02 068346 A (TORAY IND INC), 7 March 1990

## Description

### FIELD OF THE INVENTION

The present invention is related to disposable wiping articles, and more particularly to disposable wiping articles having a macroscopically three dimensional wiping surface.

### BACKGROUND OF THE INVENTION

Disposable wiping articles are well known in the art. Such wiping articles typically have a substrate which includes one or more materials or layers. The substrate can be pre-moistened with a wetting agent prior to use, or alternatively, can be combined with a liquid at the point of use of the article. Pre-moistened wiping articles are also referred to as "wet wipes" and "towelettes."

U.S. Patent 5,525,397 to Shizuno et al. discloses a cleaning sheet comprising a polymeric network and at least one nonwoven layer. The fibers of the nonwoven layer are said to be entangled with the network to form a unitary body.

U.S. Patent 3,597,299 to Thomas et al. discloses a composite article of scrim and creped cellulose layers. The preamble of the independent claim is based on this document. The Figures of Thomas disclose bonding of layers along the lengths of scrim filaments. U.S Patent 4,522,863 to Keck et al. discloses a laminate of a tissue ply outer layer, a middle layer comprising a scrim carrying heat reactable plastisol adhesive, and a nonwoven layer of meltblown microfibers. Keck discloses windows of unbonded fibers formed between scrim filaments.

The arrangements disclosed in Thomas and Keck have the disadvantage that their resulting textures and calipers can be limited by the geometry of scrim layer. In particular, where an outer layer is bonded to a scrim reinforcing layer such that only the portions of the outer layer between scrim filaments remain unbonded to the scrim material, the texture and caliper of the outer layer is limited by the geometry of the openings in the scrim layer.

Accordingly, it is an object of the present invention to provide a disposable wiping article having a macroscopically three dimensional surface which exhibits texture and bulk for improved wiping.

Another object of the present invention is to provide a disposable wiping article having a macroscopically three dimensional surface exhibiting a random, nonrepeating texture.

Another object of the present invention is to provide a disposable wet wipe, such as a disposable wet wipe for babies, which has a macroscopically three-dimensional surface for improved cleaning of fecal material.

Another object of the present invention is to provide a multiple layer wiping article which includes a first layer which is gathered by contraction of a second layer relative to the first layer, and wherein the first layer is intermittently bonded to the second layer to provide improved texture of the gathered first layer.

Another object of the present invention is to provide a wiping article having a first layer, and a second layer comprising a net-like arrangement of filaments extending between filament intersections, wherein the first layer is intermittently bonded to the second layer at discrete, spaced apart locations.

Another object of the present invention is to provide a premoistened wipe which can be packaged for use as a wipe for cleaning fecal material from infants or incontinent adults.

### SUMMARY OF THE INVENTION

The present invention provides a disposable wiping article according to the independent claim. The wiping article includes at least two layers, or plies. A first layer can comprise a nonwoven web of fibers. The second layer comprises a net-like arrangement of filaments, the filaments extending between filament intersections. In one embodiment, the second layer comprises a plastic scrim material having a nonrandom, repeating pattern of filament intersections and openings, or cells, defined between the filaments.

The first layer is bonded to the second layer, and the first layer has a macroscopically three dimensional surface comprising a random, non-repeating arrangement of peaks and valleys. This nonrandom, non-repeating arrangement of peaks and valleys is decoupled from the repeating pattern of filament intersections and opening geometry of the scrim in that the arrangement of peaks and valleys is not confined to the repeating, nonrandom geometry of the openings in the scrim material.

The first layer can be intermittently bonded to the filaments of the second layer at discrete, spaced apart locations. In particular, the first layer can be intermittently bonded to the second layer at the filament intersections. Portions of the filaments intermediate the filament intersections are not bonded to the first layer, so that the final surface texture of the first layer is not limited by the repeating, nonrandom geometry of the openings in the net-like arrangement of filaments.

Portions of the first layer are gathered by contraction of the second layer relative to the first layer, thereby providing the macroscopically three dimensional surface of the first layer. The three dimensional surface of the first layer has relatively elevated peaks and relatively depressed valleys. The peaks of the first layer provide elongated, elevated ridges. At least some of the ridges extend across at least one filament of the second layer.

The ridges can have a length greater than the distance between adjacent filament intersections. The resulting elongated ridges are deformable and provide wiping elements for enhanced removal of material from the surface being cleaned. At least some of the elongated ridges extend in a direction different from at least some of the other ridges. Accordingly, the article is effective to pick up material when the article is used to wipe in different directions.

The resulting soft, deformable ridges are believed to provide a relatively soft wiping surface as compared to embossed surfaces. As a result, the wiping article of the present invention can provide effective, yet gentle cleaning.

Further, without being limited by theory, it is believed that the wiping article of the present invention avoids repeating, nonrandom surface texture, which can be perceived as more harsh than a random, nonrepeating pattern.

The macroscopically three dimensional surface is characterized by the Average Height Differential between the peaks and the valleys, the Average Peak to Peak Distance, and the nondimensional Surface Topography Index, which is the ratio of the Average Height Differential to the Average Peak to Peak Distance. The Average Height Differential can be at least about 0.5 mm, more preferably at least about 1.0 mm, and still more preferably at least about 1.5 mm. The Average Peak to Peak Distance can be at least about 1.0 mm, more preferably at least about 1.5 mm, and still more preferably at least about 2.0 mm. In one embodiment, the Average Peak to Peak distance is between about 2 to 20 mm, and more particularly, between about 4 to 12 mm. The Surface Topography Index is according to the invention at least 0.10, and less than about 2.5. In one embodiment, the Surface Topography Index is preferably at least about 0.20.

Preferably, the disposable wiping article includes a third layer, wherein the second layer is disposed between the first layer and the third layer. The third layer can be of substantially the same form as the first layer, or alternatively, can be different from the first layer. In one embodiment, the first and third layers are nonwoven webs of substantially the same material and construction, and each of the first and third layers is gathered by contraction of the second layer to provide elongated ridges on the outwardly facing surfaces of each of the first and third layers.

The wiping article can have side edges parallel to a length of the article and end edges parallel to a width of the article. A first plurality of the filaments of the second layer can be substantially parallel to the length, and a second plurality of the filaments can be substantially parallel to the width.

Alternatively, a first plurality of the filaments of the second layer can be inclined at an angle of between about 20 degrees and about 70 degrees (more preferably between about 30 and 60 degrees) with respect to the length of the article, and the second plurality of fibers can be inclined at an angle of between about 20 degrees and about 70 degrees (more preferably between about 30 and 60 degrees) with respect to the width of the article. For instance, the filaments can be inclined at an angle of about 45 degrees relative to the length and width. Such an arrangement provides improved extensibility of the article parallel to the length and parallel to the width of the article.

Without being limited by theory, it is also believed that such extensibility allows stretching of the wiping article for increasing the area that is in contact with the surface being cleaned, while subsequent contraction of the article helps to trap material in the valleys.

A method for making a multiple layer wiping article includes the steps of providing a first layer comprising a nonwoven web of fibers, providing a second layer comprising a net-like arrangement of filaments, positioning the first layer adjacent the second layer in face to face relationship, intermittently bonding the first layer to discrete, spaced apart portions of the second layer, whereby portions of the filaments extending between filament intersections remain unbonded to the first layer, and contracting the second layer relative to the first layer to provide a gathered, macroscopically three dimensional surface of the first layer.

### BRIEF DESCRIPTION OF THE DRAWINGS

Figure 1 is a plan view schematic illustration of a three layer embodiment of the wiping article of the present invention, wherein the second layer comprises a scrim material having filaments which run parallel to the side and end edges of the article, wherein a portion of the first layer is shown cut away, and wherein surface features of the first layer are omitted for clarity.
Figure 2 is an illustration of the type shown in Figure 1 depicting an alternative embodiment of the present invention wherein the filaments of the second layer are inclined at an angle of about 45 degrees relative to the side and end edges of the article.
Figure 3 is a plan view schematic illustration of the photograph of Figure 5 showing the texture of the macroscopically three-dimensional outer surface of the first layer, and particularly the extended ridges on the outer surface of the first layer.
Figure 4 is a cross-sectional illustration of the article taken parallel to one of the filaments of the second layer and showing portions of the filament extending intermediate the filament intersections, the portions of the filament being unbonded to the first layer, as well as portions of the filaments extending intermediate the filament intersections which are unbonded to the third layer.
Figure 5 is a photomicrograph showing the texture of the macroscopically three dimensional surface of the first layer, and in particular the elongated ridges of the surface. The scale in Figure 5 is in inches.
Figure 6 is a enlarged photomicrograph of the type shown in Figure 5 showing an elongated ridge having branches extending in different directions.
Figure 7 is a Scanning Electron Micrograph providing a perspective view of the macroscopically three dimensional surface of the first layer.
Figure 8 is a Scanning Electron Micrograph of a cross-section of the article showing portions of filaments extending intermediate filament intersections, which portions of the filaments are unbonded to the first layer.
Figure 9 is a Scanning Electron Micrograph showing bonding of the first and third layers to the second layer at the filament intersections.

### DETAILED DESCRIPTION OF THE INVENTION

As used herein, the term "macroscopically three dimensional" means a three dimensional structure or pattern which is readily visible to the naked eye when the perpendicular distance between the viewer's eye and the plane of the article being viewed is about 30.48cm (12 inches). In other words, the three-dimensional structures of the present invention are cleaning sheets that are non-planar, in that one or both surfaces of the sheet exist in multiple planes, where the difference in elevation between those planes is observable to the normal, naked eye when the structure is observed from about 30.48 cm (12 inches). By way of contrast, the term "planar" refers to cleaning sheets having fine-scale surface aberrations on one or both sides, the surface aberrations not being readily visible to the naked eye when the perpendicular distance between the viewer's eye and the plane of the web is about 30.48cm (12 inches) or greater. In other words, on a macroscale, the observer would not observe that one or both surfaces of the sheet exist in multiple planes so as to be three-dimensional.

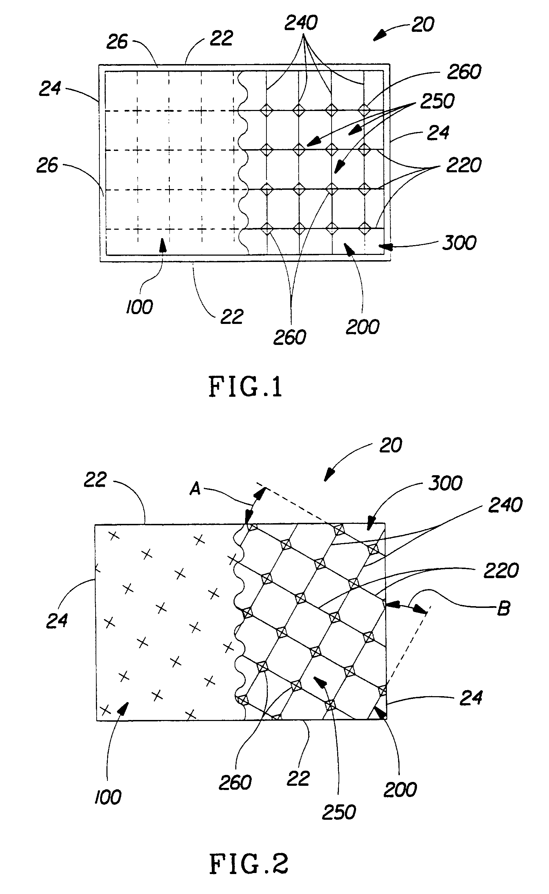

Figure 1 illustrates a multiple layer disposable wiping article 20 according to the present invention. The wiping article 20 includes side edges 22 and end edges 24. The side edges 22 extend generally parallel to the length of the article 20, and the end edges 24 extend generally parallel to the width of the article. Optionally, the article 20 can include an edge seal 26 extending around the perimeter of the article. Such an edge seal 26 can be formed by heating, by use of adhesives, or by a combination of heating and adhesives.

The wiping article 20 includes a first layer 100 and a second layer 200. Preferably, the wiping article also includes a third layer 300. The second layer 200 can be disposed between the first layer 100 and the third layer 300. In Figure 1, a portion of the first layer 100 is shown cut away to reveal underlying portions of the second layer 200 and the third layer 300.

The first layer 100 can be formed from woven materials, nonwoven materials, paper webs, foams, battings, and the like such as are known in the art. Particularly preferred materials are nonwoven webs having fibers or filaments distributed randomly as in "air-laying" or certain "wet-laying" processes, or with a degree of orientation, as in certain "wet-laying" and "carding" processes. The fibers or filaments of the first layer 100 can be natural, or of natural origin (e.g. cellulosic fibers such as wood pulp fibers, cotton linters, rayon, and bagasse fibers) or synthetic (e.g. polyolefins, polyamides or polyesters). The third layer 300 can be substantially the same as the first layer 100, or alternatively, can be of a different material and/or construction.

In one embodiment, the first layer 100 and the third layer 300 can each comprise a hydroentangled web of synthetic nonwoven fibers having a denier of less than about 4.0, preferably less than about 3.0, and more preferably less than about 2.0 grams per 9000 meter of fiber length. A suitable first layer 100 (as well as a suitable third layer 300) is a hydroentangled web of polyester fibers having a denier of about 1.5 grams per 9000 meters of fiber length or less, and the web having a basis weight of about 30 grams per square meter. A suitable web is available from PGI Nonwovens of Benson, N.C. under the designation PGI 9936.

The second layer 200 is joined in a discontinuous manner to the first layer 100, and provides gathering of the first layer, such as by contraction of the second layer 200 relative to the first layer 100 when the layers are heated. The second layer 200 preferably has openings therethrough. In one embodiment, the second layer 200 comprises a net-like arrangement of filaments having openings defined by adjacent filaments. Alternatively, the second layer could comprise an apertured layer having openings therethrough, or an embossed layer having surface depressions instead of or in addition to openings. For instance, the second layer 200 could be an apertured or embossed plastic film.

In the embodiments illustrated, the second layer comprises a net like arrangement of filaments including a first plurality of filaments 220 and a second plurality of filaments 240. The filaments 220 extend generally parallel to one another, and the filaments 240 extend generally parallel to one another and generally perpendicular to the filaments 220. The filaments extend between filament intersections 260. The intersecting, adjacent filaments 220 and 240 define openings 250 in the second layer 200. The filament intersections and openings 250 are arranged in a generally nonrandom, repeating grid-like pattern.

The second layer 200 can comprise a polymeric net (referred to herein as a "scrim material"). Suitable scrim materials are described in U.S. Patent 4,636,419. The scrim may be derived from a polyolefin such as polyethylene or polypropylene, copolymers thereof, poly(butylene terephthalate), polyethylene terephthalate, Nylon 6, Nylon 66, and the like.

The scrim material is joined to the layers 100 and 300 through lamination via heat or chemical means such as adhesives. Preferably, the filaments of the scrim material contract relative to the layers 100 and 300 upon heating, such that contraction of the second layer 200 gathers the layers 100 and 300, and imparts a macroscopic three dimensional texture to the outer surfaces of the lavers 100 and 300, as is described in more detail below.

A particularly suitable scrim material useful as the second layer 200 is a heat activated reinforcing netting available from Conwed Plastics of Minneapolis, MN as THERMANET brand reinforcing netting, Number R05060 having a polypropylene/EVA resin, 2 sided adhesive, and a filament count of 3 filaments per inch by 2 filaments per 2.54cm (inch) prior to contraction such as by heating. After heating, the second layer 200 can have between about 3.5 to 4.5 filaments per inch by between about 2.5 to 3.5 filaments per inch.

By "2 sided adhesive" it is meant that the EVA adhesive (Ethyl-Vinyl Acetate adhesive) is present on both sides of the filaments. The activation temperature of the EVA is generally about 85 Centigrade (about 185 Fahrenheit). During lamination of the layer 200 to the polyester fibers of the layers 100 and 300, the EVA adhesive is activated to provide bonding between the filaments of the layer 200 and the fibers of the layers 100 and 300. Without being limited by theory, it is believed that pressing at a relatively low pressure (e.g. less than 3.45 bar (50 psi) and more preferably less than 1.73 bar (25 psi)) for a relatively short time (e.g. less than about 30 seconds), the filaments of the layer 200 are not continuously bonded to the nonwovens of layers 100 and 300. This discontinuous bonding, along with the shrinkage of the polypropylene filaments upon heating, provides enhanced texture of the outward surfaces of layers 100 and 300.

In Figure 1, the filaments 220 extend generally parallel to the side edges 22 and to the length of the article 20. Likewise, the filaments 240 extend generally parallel to the end edges 24 and to the width of the article 20.

Alternatively, the filaments 220 can be inclined at an angle of between about 20 and about 70 degrees with respect to the length of the article 20 and the side edges 22, and more preferably between about 30 degrees and about 60 degrees. The filaments 240 can be inclined at an angle of between about 20 and about 70 degrees with respect to the width of the article 20 and the end edges 24, and more preferably between about 30 degrees and about 60 degrees.

Figure 2 shows an embodiment of the present invention wherein the filaments 220 are inclined at an angle of about 45 degrees with respect to the side edges 22 (Angle A in Figure 2), and wherein the filaments 240 are inclined at an angle of about 45 degrees with respect to the end edges 24 (Angle B in Figure 2). Such an arrangement provides the advantage that the angled orientation of the filaments 220 and 240 with respect to the length and width of the article 20 permits deformation of the net structure of layer 200 parallel to the edges 22 and 24. Such deformation provides the article with elastic like behavior parallel to the length and width of the article.

By "elastic like behavior" parallel to a direction of the article it is meant that the article can be elongated under tension in that direction to have an elongated dimension measured in that direction which is at least 120 percent of the article's original, relaxed dimension in that direction, and that upon release of the elongating tension the article recovers to within 10 percent of its relaxed dimension.

An important aspect of the present invention is that the first layer 100 is intermittently bonded to the second layer 200. In particular, the first layer 100 can be intermittently bonded to the second layer 200 at the filament intersections 260, while portions of the filaments 220, portions of the filaments 240, or portions of both the filaments 220 and 240 intermediate the filament intersections 260 remain unbonded to the first layer 100.

As a result, the surface texture of the outer surface of the first layer 100 is not limited by the geometry of the openings in the net-like arrangement of filaments, but rather, is decoupled from the repeating, nonrandom geometry of the openings 250. Similarly, the third layer 300 can be intermittently bonded to the second layer 200 to provide similar surface texture to the outer surface of the third layer 300.

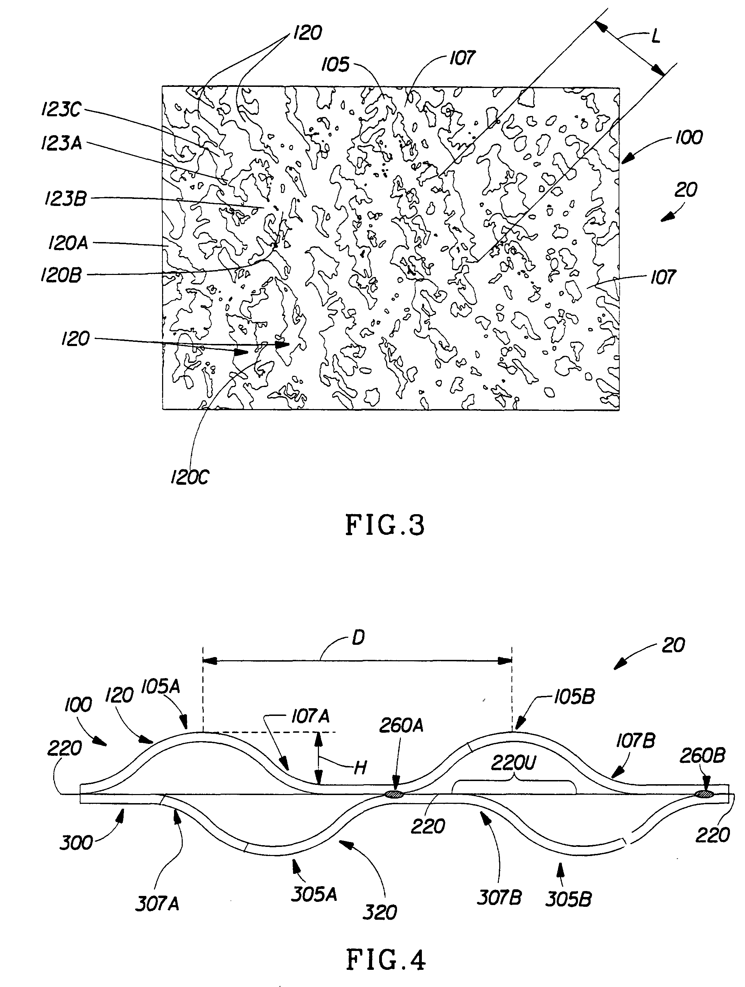

The surface texture of the first layer 100 is omitted in Figures 1 and 2 for clarity. The surface texture is shown in Figures 3-8.

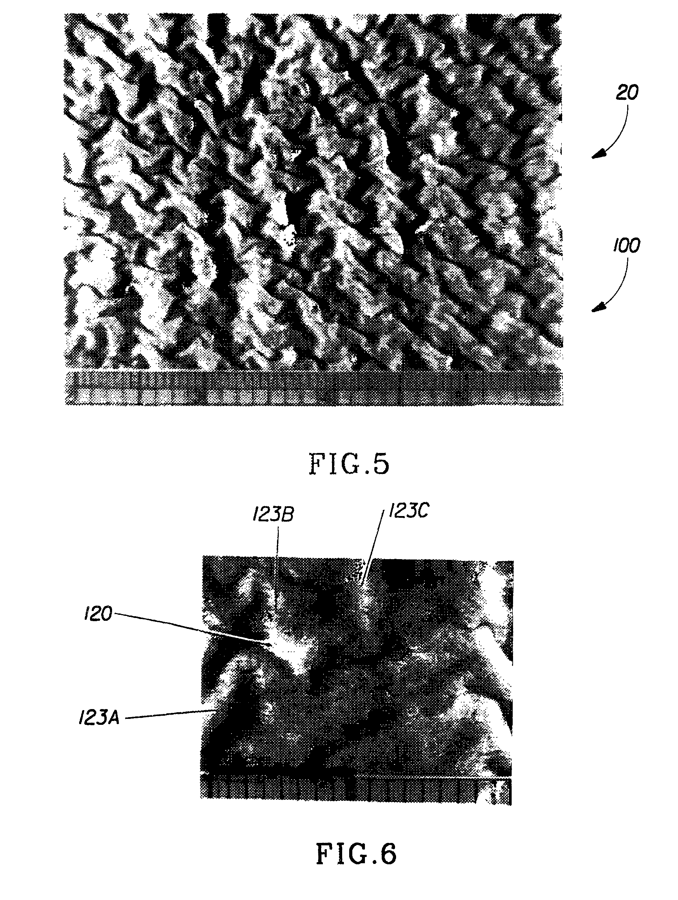

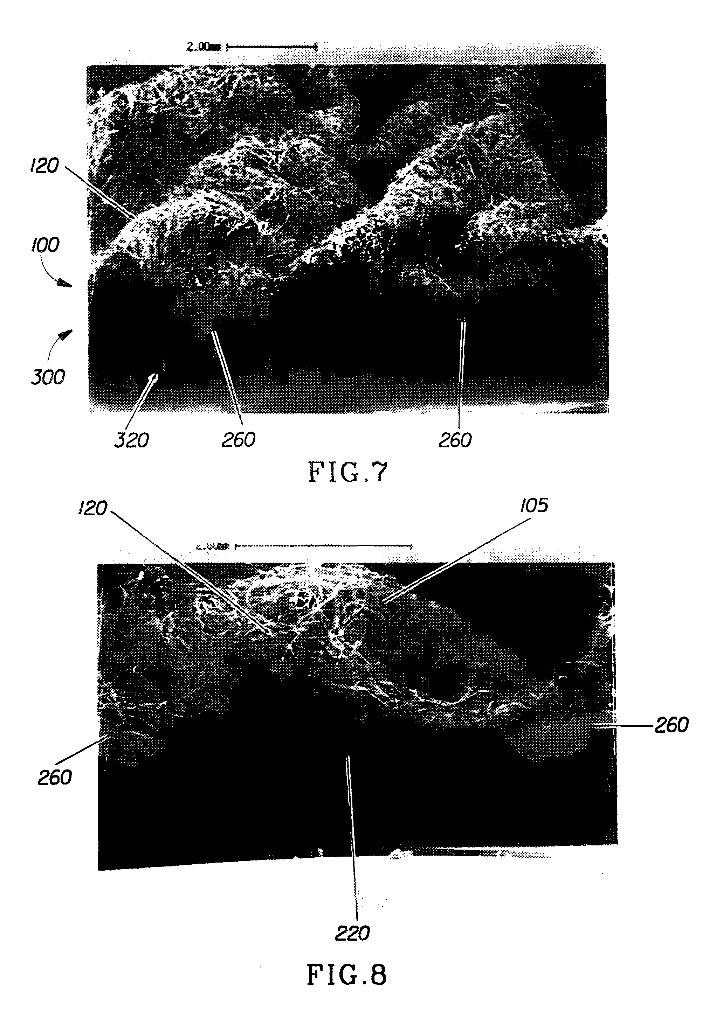

Figure 3 provides a schematic illustration of the surface texture of first layer 100 shown in the photograph of Figure 5. Figure 4 provides a cross-sectional illustration of the surface texture of the first layer 100 and the third layer 300. Figure 5 is a photomicrograph showing the texture of the macroscopically three dimensional surface of the first layer 100. Figure 6 is a photomicrograph showing the three dimensional surface of the first layer 100 enlarged. Figure 7 is a scanning electron micrograph providing a perspective view of the three dimensional surface of the first layer 100. Figure 8 is a scanning electron micrograph of a cross-section of the article.

Referring to Figure 3-8, portions of the first layer 100 are gathered by contraction of the second layer 200 relative to the first layer 100. This gathering provides the first layer 100 with a macroscopically three dimensional surface as illustrated in Figure 3-8. Likewise, the third layer 300 can be gathered by contraction of the second layer 200 to provide the third layer 300 with a macroscopically three dimensional surface.

The three dimensional surface of the first layer 100 has relatively elevated peaks 105 and relatively depressed valleys 107. The third layer has peaks and valleys. In Figure 4, the peaks of layer 100 are indicated with reference numbers 105A and 105B. and the valleys of layer 100 are indicated with reference numbers 107A and 107B. Similarly, the peaks of layer 300 are labeled 305A and 305B, and the valleys are labeled 307A and 307B. The peaks 105 provide elongated ridges 120 on the outward surface of the first layer 100, and the peaks 305 provide elongated ridges 320 on the outward surface of the third layer 300.

The macroscopic three dimensionality of the outer surface of the first layer 100 can be described in terms of the "Average Height Differential" of a peak and an adjacent valley, as well as in terms of the "Average Peak-to-Peak Distance" between adjacent peaks. The height differential with respect to a peak 105A/valley 107A pair is the distance H in Figure 4. The peak-to-peak distance between an adjacent pair of peaks 105A and 105B is indicated as distance D in Figure 4. The "Average Height Differential" and the "Average Peak-to-Peak Distance" for the article are measured as set forth below in "Test Methods." The "Surface Topography Index" of the outward surface is the ratio obtained by dividing the Average Height Differential of the surface by the Average Peak to Peak Distance of the surface.

Without being limited by theory, it is believed that the Surface Topography Index is a measure of the effectiveness of the macroscopically three dimensional surface in receiving and containing material in the valleys of the surface. A relatively high value of Average Height Differential for a given Average Peak to Peak Distance provides deep, narrow valleys which can trap and hold materials. In particular, such an arrangement is desirable for receiving and containing fecal material. Accordingly, a relatively high value of Surface Topography Index is believed to indicate effective capture of materials during wiping.

The Average Height Differential of the outward surface of the first layer 100 and the third layer 300 can be at least about 0.5 mm, more preferably at least about 1.0 mm, and still more preferably at least about 1.5 mm. The Average Peak to Peak Distance can be at least about 1.0 mm, more preferably at least about 1.5 mm, and still more preferably at least about 2.0 mm. In one embodiment, the Average Peak to Peak distance is between about 2.0 to 20 mm, and more particularly, between about 4.0 to 12 mm. The Surface Topography Index is at least 0.10, and less than about 2.5. In one embodiment, the Surface Topography Index is at least about 0.20.

The wiping articles of the present invention have the characteristic that portions of the filaments 220, portions of the filaments 240, or portions of both the filaments 220 and 240 of the second layer 200 are not bonded to the first layer 100. Referring to Figure 4, a portion of a filament 220 extending intermediate filament intersections 260A and 260B is not bonded to the first layer 100. The portion of the filament 220 which is not bonded to the first layer 100 is indicated by reference number 220U. A gap between the filament 220 and the first layer 100 provides a void space 180 intermediate the first layer 100 and the filament 220. Similarly, portions of the filament 220 extending intermediate filament intersections 260 are not bonded to the third layer 300, thereby providing a void space 380 intermediate the third layer 300 and the filament 220.

Figures 7 and 8 also illustrate this characteristic of the article 20. In Figure 7, elongated ridges 120 and 320 are visible on the outward surfaces of both the first and third layers 100, 300, respectively. In Figure 8, a filament 220 is seen extending between two filament intersections 260. The portion of the filament extending between the two filament intersections is spaced from, and not bonded to, the first layer.

Ridges 120 are shown in plan view in Figure 3 and Figure 5. At least some of the ridges 120 extend across at least one filament of the second layer 200. In Figure 4, the ridge 120 corresponding to peak 105A extends across at least one filament 220.

Because the ridges extend across one or more filaments, the ridges can have a length greater than the maximum distance between adjacent filament intersections 260 (the distance between adjacent filament intersections after contraction of layer 200 and gathering of layers 100 and 300). In particular, the length of the ridges 120 can be greater than the maximum dimension of the openings 250 in Figure 1 (i.e. greater than the length of the diagonal extending across the rectangular openings 250). The length of a ridge 120 is indicated by the letter L in Figure 3. The Length L is the straight line distance between two ends of a ridge 120, the ends of the ridge 120 being those points where a ridge 120 terminates at a valley 107.

The value of L can be at least about 1.0 centimeter, more particularly at least about 1.5 centimeter for some of the ridges 120. In one embodiment, at least some of the ridges 120 have a length L of at least about 2.0 centimeters. The length L can be at least twice the distance between adjacent filament intersections.

For instance, in order to determine the length of ridges 120 relative to the distance between adjacent filament intersections, the wiping article 20 can be wetted (if not premoistened) and postioned on a light table or other suitable source of back lighting. Such back lighting, in combination with wetting of the wiping article, can be used to make the filament intersections of the layer 200 visable through the layer 100, so that the lengths of ridges 120 relative to the distance between filament intersections can be measured with a scale.

The elongated ridges provide soft, deformable wiping elements for enhanced removal of material from the surface being cleaned. In contrast, if the filaments of the second layer were continuously bonded to the first and second layers, then any texture features of the first and third layers would be confined to the area associated with the openings 250 in the second layer 200.

At least some of the elongated ridges extend in a direction different from at least some of the other ridges. Referring to Figure 3, the ridges 120A, 120B, and 120C each extend in a different direction. Accordingly, the article is effective to pick up material when the article is used to wipe in different directions.

Figures 3 and 6 also illustrate that at least some of the ridges 120 can have branches extending in different directions. In Figure 3, a ridge 120 is shown having three branches 123A, 123B, and 123C extending in different directions. Likewise, Figure 6 shows a ridge 120 having at least three branches labeled 123A, 123B, and 123C.

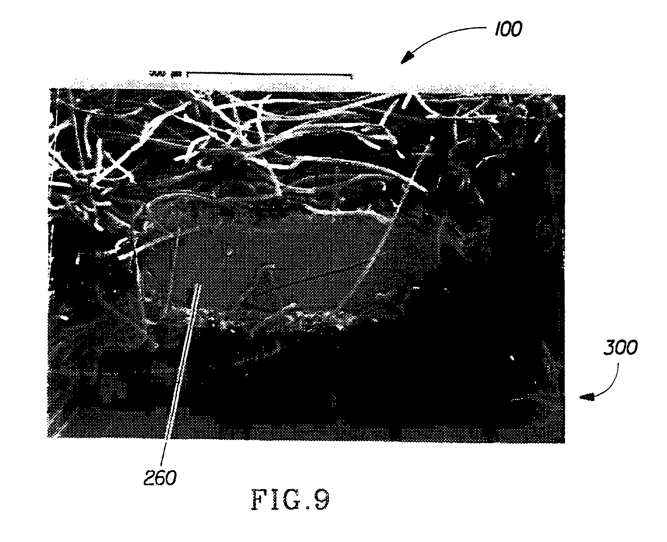

The first layer 100 and the third layer 300 are securely bonded to the second layer 200 at the filament intersections 260. Figure 9 illustrates the bonding of fibers of both the layers 100 and 300 to the second layer at a filament intersection 260.

Referring to Figures 4, 7 and 8, the peaks 105 of the first layer 100 are generally offset from the peaks 305 of the third layer in the plane of the article 20. For instance, in Figure 4 the peak 305A of the third layer does not directly underlie the peak 105A, but instead is generally aligned with the valley 107A associated with peak 105A. Accordingly, the peaks 105 of the first layer are generally aligned with valleys 307 of the third layer, and the peaks 305 of the third layer are generally aligned with valleys 107 of the first layer.

A method for making a multiple layer wiping article will now be described. A first nonwoven layer, a second layer comprising a net like arrangement of filaments, and a third nonwoven layer are provided. The first layer is positioned adjacent an upper surface of the second layer, in face to face relationship with the second layer. The third layer is positioned adjacent a lower surface of the second layer, in face to face relationship with the second layer.

The first layer and the third layer are then intermittently bonded to discrete, spaced apart portions of the second layer, such that portions of the filaments extending between filament intersections remain unbonded to the first layer, and such that portions of the filaments extending between filament intersections remain unbonded to the third layer. The second layer is contracted relative to the first layer and the third layer to provide a gathered, macroscopically three dimensional outward surface of the first layer, and a gathered, macroscopically three dimensional outward surface of the third layer. The steps of bonding and contracting can occur simultaneously, or in sequence.

The step of intermittently bonding the second layer to the first layer and the third layer can comprise the step of heated pressing of the first layer, the second layer, and third layer at a relatively low pressure for a relatively short time period to avoid relatively continuous bonding of the second layer to the first and third layers.

In one embodiment, the three layers can be joined using a BASIX B400 hand press manufactured by the HIX Corp. of Pittsburg, Kansas. The three layers are joined by pressing in the hand press at a temperature of about 165.6°C (330 Fahrenheit) for about 13 seconds. The hand press has an adjustment for varying the clearance, and hence the pressure, provided in the press. The adjustment can be varied as desired to provide the desired texture in the layers 100 and 300.

The wiping article 20 can be impregnated with a liquid composition to provide a premoistened wipe, or "wet wipe." The liquid composition can be water based (at least 50 percent by weight water), and can include a number of ingredients in addition to water, including but not limited to preservatives, surfactants, emolients, moisturizers (including but not limited to humectants and skin conditioning agents), fragrances, and fragrance solubilizers, as well as other ingredients. The liquid composition is preferably at least 85 percent by weight water. The dry substrate comprising the three layers 100, 200, 300 can be saturated with about 1.5 grams to about 4.5 grams of the liquid composition per gram of the dry substrate, and in one embodiment, between about 2.0 and 3.0 grams of liquid composition per gram of dry substrate.

Preferably, the wiping article 20 is premoistened with a liquid composition comprising at least 85 percent by weight water and an effective amount of a surfactant, an effective amount of an emolient, an effective amount of preservative, an effective amount of a humectant, an effective amount of a fragrance, and an effective amount of a fragrance solubilizer.

The described embodiment of the wiping article of the present invention provides the advantage that even when wetted with a liquid composition to provide a premoistened wipe, the wiping article can maintain a macroscopically three dimensional surface having the desired Average Height Differential, Average Peak to Peak Distance, and Surface Topography Index.

In one embodiment, the liquid composition includes at least about 95 percent by weight water. The liquid composition can also include about 0.5-5.0 percent by weight Propylene Glycol, which can serve as an emolient and humectant; about 0.1-3.0 percent by weight PEG-75 Lanolin, which can serve as an emolient; about 0.1-3 percent by weight Cocoamphodiacetate, which can serve as a surfactant for cleansing the skin; about 0.1-3 percent by weight Polysorbate 20, which can serve as a surfactant for cleansing the skin and as an emulsifier for solubilizing fragrance components; about 0.01-0.3 percent by weight Methylparaben, which can serve as a preservative; about 0.005-0.10 percent by weight Propylparaben, which can serve as a preservative; about 0.005-0.1 percent by weight 2-Bromo-2-Nitropropane-1, 3-Diol, which can serve as a preservative; and about 0.02-1.0 percent by weight of a fragrance component.

In another embodiment, the liquid composition can include at least about 95 percent by weight water, about 0.01-1 percent by weight Tetrasodium EDTA, about 0.05-0.8 percent by weight Potassium Sorbate, about 0.1-5.0 percent by weight Propylene Glycol, about 0.1-3.0 percent by weight PEG 75 Lanolin, about 0.1-3 percent by weight C12-13 Pareth-7, about 0.1-2.0 percent by weight Polysorbate 20; about 0.01-1.0 percent by weight Disodium Phosphate, about 0.10-1.0 percent by weight Phenoxyethanol, about 0.01-0.5 percent by weight Benzalkonium Chloride; about 0.01-1.0 percent by weight Citric Acid, and about 0.02-1.0 percent by weight of a fragrance component.

Other liquid compositions with which the substrate can be moistened are described in the following patent documents which are incorporated herein by reference: U.S. Patent 4,941,995 issued July 17, 1990 to Richards et al.; U.S. Patent 4,904,524 issued February 27, 1990 to Yoh; U.S. Patent 4,772,501 issued September 20, 1988 to Johnson et al.

According to the present invention, the disposable wiping article can be premoistened, with a plurality of premoistened wipes being packaged in a suitable package. A suitable package can include a tub type container, such as is disclosed in U.S. Patent 5,065,887 issued November 19, 1991 to Schuh et al. The tub container can be wrapped in a generally moisture impervious wrap, such as a heat shrinkable polymeric film.

The package can include instructions related to using the premoistened wiping article for cleaning body parts, including removal of fecal material from the skin. The instructions can include a description of wiping with the wiping article, including wiping in different directions in order to take advantage of the different orientation of the ridges, as well as initial stretching of the wiping article followed by contraction of the article to trap the materials in the valleys of the surfaces of the wiping article.

### TEST METHODS:

In measuring the Average Peak to Peak Distance and the Average Height Differential, the following procedure is used. The method can be used to measure samples that are dry, samples that are premoistened (wet), and/or samples that have dried out (e.g. premoistened samples that have been dried).

Prior to taking measurements, a straight guide line is drawn on the surface of interest (e.g. the outward surface of layer 100) using a permanent extra fine marker, such as a Sharpie brand extra fine point permanent marker. The guide line is drawn taking care not to distort the surface being measured. The guide line can serve as a focusing aid in making measurements. As an additional aid. "ridge lines" can also be drawn along the ridge peaks, the "ridge lines" intersecting the guide line to facilitate measurement of the peak spacing.

### Average Peak to Peak Distance:

Simple light microscopy is used to measure the distance between adjacent peaks located along the guide line. The peak to peak distance is the shortest distance between each pair of adjacent peaks located along the guide line. If the ridges are perpendicular to the guide line, then the peak to peak distance is measured along the guide line. If the ridges are not perpendicular to the guide line, the peak to peak distance is measured along a direction which intersects the guide line midway between the two adjacent peaks and which provides the shortest distance between the two adjacent peaks. At least 10 such measurements are taken. The Average Peak to Peak Distance is the average of these measurements.

### Average Height Differential:

The Average Height Differential is determined using a light microscope (e.g. Zeiss Axioplan, Zeiss Company Germany) equipped with a depth measuring device (e.g. Microcode II, sold by Boeckeler Instruments) which provides a reading related to a change in height for a given change in focus of the microscope.

Measurements of height differential are taken along the same portion of the guide line from which the Peak to Peak measurements are taken. The microscope is focused on a peak along the guide line, and the depth measuring device is zeroed. The microscope is then moved to an adjacent valley along the guide line, and the microscope is refocused on the surface of the valley along the guide line. The display of the depth measuring device indicates the relative height difference between the peak/valley pair (the distance H in Figure 4). In general, two height measurements will be obtained for each peak to peak distance measurement, corresponding to the descent from a peak to a valley and the ascent from the valley to the adjacent peak. This measurement is repeated for the peak/valley pairs encountered along the guide line. The Average Height Differential is the average of these measurements.

The Average Peak to Peak Distance and the Average Height Differential can be calculated based on measurements made along any convenient guide line provided at least 10 consecutive peak pairs can be identified without encountering edge effects or other abnormalities.

### Example:

A wiping article 20 according to the present invention includes a first layer 100, a second layer 200, and a third layer 300. The first layer 100 and the third layer 300 each comprise a hydroentangled web of polyester fibers having a basis weight of about 30 grams per square meter. The second layer comprises the above described THERMANET® brand reinforcing netting Number R05060 having a polypropylene/EVA resin, 2 sided adhesive, and a filament count of 3 filaments per inch by 2 filaments per inch prior to contraction of the second layer. The second layer 200 is positioned between the first layer 100 and the third layer 300 in the BASIX B400 hand press described above. The three layers are joined by pressing in the hand press at a temperature setting of about 330 degrees Fahrenheit for about 13 seconds.

The wiping article has the measured values of peak to peak distance and height differential listed in Table 1. Table 1 also lists the Average Peak to Peak Distance, the Average Height Differential, and the Surface Topography Index for the sample. In this particular example, the sample was first measured in its dry state. Then the sample was wetted with at least 1.5 grams of a liquid composition comprising at least 95 percent by weight water per gram of dry sample. The Average Peak to Peak Distance and Average Height Differential Measurements was then repeated along the same guide line to obtain values for the wet sample. Finally, the sample was allowed to air dry for at least 10 hours at a temperature of at least 68 degrees Fahrenheit and a relative humidity of no more than 70 percent, such that the dried sample weight was within 5 percent of the initial dry sample weight. The Average Peak to Peak Distance and Average Height Differential Measurements were then repeated along the same guide line to obtain values for the dried sample.

**TABLE I**

| | DRY | | WET | | DRIED | |
|---|---|---|---|---|---|---|
| Adjacent Peak Pair Number | Peak to Peak Distance (mm) | Peak/Valley Height Differential (mm) | Peak to Peak Distance (mm) | Peak/Valley Height Differential (mm) | Peak to Peak Distance (mm) | Peak/Valley Height Differenti al (mm) |
| 1 | 5.0 | 1.0 | 4.0 | 0.8 | 4.0 | 0.9 |
| | | 1.6 | | 1.2 | | 1.3 |
| 2 | 12.0 | 1.8 | 12.0 | 1.6 | 12.0 | 1.6 |
| | | 2.2 | | 1.6 | | 1.8 |
| 3 | 5.5 | 1.7 | 5.0 | 0.9 | 5.0 | 1.2 |
| | | 1.3 | | 1.1 | | 1.3 |
| 4 | 10.5 | 1.7 | 11.0 | 1.5 | 10.5 | 1.5 |
| | | 1.6 | | 1.7 | | 1.9 |
| 5 | 11.0 | 1.5 | 11.0 | 1.4 | 11.5 | 1.9 |
| | | 2.2 | | 2.3 | | 1.7 |
| 6 | 4.0 | 1.4 | 4.0 | 1.3 | 3.5 | 1.1 |
| | | 0.4 | | 0.3 | | 0.1 |
| 7 | 6.0 | 2.0 | 6.0 | 2.0 | 6.0 | 2.0 |
| | | 2.3 | | 2.0 | | 1.9 |
| 8 | 7.0 | 1.8 | 6.0 | 1.5 | 6.5 | 1.5 |
| | | 2.4 | | 2.1 | | 2.2 |
| 9 | 8.0 | 1.6 | 8.0 | 1.1 | 8.0 | 1.1 |
| | | 2.0 | | 1.9 | | 1.8 |
| 10 | 6.0 | 2.6 | 6.0 | 1.7 | 6.0 | 1.8 |
| | | 2.4 | | 2.6 | | 2.6 |

| | | | | | | |
|---|---|---|---|---|---|---|
| AVERAGE | 7.5 mm | 1.8 mm | 7.3 mm | 1.5 mm | 7.3 mm | 1.6mm |
| Surface Topography Index | | 0.24 | | 0.21 | | 0.22 |

A wiping article having the recited values of Surface Topography. Average Peak to Peak Distance, and/or Average Height Differential, as claimed, and as calculated from measurements made in a dry, wet, or dried state along any selected guide line, is considered to be within the scope of the present invention.

## Claims

1. A disposable wiping article (20) comprising an outward, macroscopically three dimensional surface having a random, non-repeating arrangement of peaks and valleys, **characterised in that** the macroscopically three dimensional surface has a Surface Topography Index of at least about 0.10, preferably at least about 0.20.

2. The wiping article of Claim 1 wherein the macroscopically three dimensional surface is **characterized by** an Average Height Differential of at least about 0.5 mm.

3. The wiping article of Claims 1 or 2 wherein the macroscopically three dimensional surface is **characterized by** an Average Peak to Peak Distance of at least about 2.0 mm.

4. The wiping article of Claims 1, 2, or 3 wherein the wiping article is **characterized by** a first layer and a second layer joined to the first layer, wherein the second layer gathers the first layer to provide the first layer with an outward, macroscopically three dimensional surface comprising a random, non-repeating arrangement of peaks and valleys.

5. The wiping article of Claims 1, 2, 3, or 4 is **characterized by** a first layer and a second layer, the second layer comprising a net-like arrangement of filaments, the filaments extending between filament intersections, and wherein the first layer is bonded to the second layer, and wherein the first layer has an outward macroscopically three dimensional surface comprising a random, non-repeating arrangement of peaks and valleys.

6. The disposable wipe of Claim 5 is **characterized by** the first layer being intermittently bonded to the second layer, and wherein portions of the filaments intermediate the filament intersections are not bonded to the first layer.

7. The disposable wiping article of Claim 6 is **characterized by** the peaks and valleys of the first layer providing elongated, elevated soft ridges, and wherein at least some of the ridges extend across at least one filament of the second layer.

8. The disposable wiping article of Claim 7 is **characterized by** at least some of the ridges having a length greater than the maximum distance between adjacent filament intersections.

9. The disposable wiping article of Claims 6 or 7 is **characterized by** at least some of the ridges extending in a direction different from at least some of the other ridges.

10. The disposable wiping article of Claims 6, 7, or 8 is **characterized by** at least some of the ridges comprising branches extending in different directions.

## Patentansprüche

1. Wegwerfbarer Wischartikel (20) mit einer äußeren, makroskopisch dreidimensionalen Oberfläche mit einer zufälligen, sich nicht wiederholenden Anordnung von Spitzen und Tälern, **dadurch gekennzeichnet, daß** die makroskopisch dreidimensionale Oberfläche einen Oberflächentopographieindex von wenigstens etwa 0,10, vorzugsweise von wenigstens etwa 0,20 hat.

2. Wischartikel nach Anspruch 1, in welchem die makroskopisch dreidimensionale Oberfläche **gekennzeichnet ist durch** eine mittlere Höhendifferenz von wenigstens etwa 0,5 mm.

3. Wischartikel nach den Ansprüche 1 oder 2, in welchem die makroskopisch dreidimensionale Oberfläche **gekennzeichnet ist durch** einen mittleren Spitze-zu-Spitze-Abstand von wenigstens etwa 2,0 mm.

4. Wischartikel nach den Ansprüchen 1, 2 oder 3, in welchem der Wischartikel **gekennzeichnet ist durch** eine erste Schicht und eine mit der ersten Schicht verbundene zweite Schicht, wobei die zweite Schicht die erste Schicht rafft, um die erste Schicht mit einer äußeren, makroskopisch dreidimensionalen Oberfläche mit einer zufälligen, sich nicht wiederholenden Anordnung von Spitzen und Tälern zu versehen.

5. Wischartikel nach Anspruch 1, 2, 3 oder 4, **gekennzeichnet durch** eine erste Schicht und eine zweite Schicht, wobei die zweite Schicht eine netzartige Anordnung von Filamenten aufweist, wobei sich die Filamente zwischen Filamentschnittstellen erstrecken; und wobei die erste Schicht mit der zweiten Schicht verbunden ist und wobei die erste Schicht eine nach außen makroskopisch dreidimensionale Oberfläche mit einer zufälligen, sich nicht wiederholenden Anordnung von Spitzen und Tälern aufweist.

6. Einweg-Wischartikel nach Anspruch 5, **dadurch gekennzeichnet, daß** die erste mit der zweiten Schicht intermittierend verbunden ist, und daß Bereiche der Filamente zwischen den Filamentschnittstellen nicht mit der ersten Schicht verbunden sind.

7. Einweg-Wischartikel nach Anspruch 6, **dadurch gekennzeichnet, daß** die Spitzen und Täler der ersten Schicht längliche, erhöhte weiche Rücken liefern und wobei sich wenigstens einige der Rücken über wenigstens ein Filament der zweiten Schicht erstrecken.

8. Einweg-Wischartikel nach Anspruch 7, **dadurch gekennzeichnet, daß** wenigstens einige der Rücken eine Länge haben, die größer ist als der maximale Abstand zwischen benachbarten Filament-Schnittstellen.

9. Einweg-Wischartikel nach den Ansprüchen 6 oder 7, **dadurch gekennzeichnet, daß** sich wenigstens einige der Rücken in einer Richtung erstrecken, die sich von wenigstens einigen der anderen Rücken unterscheidet.

10. Einweg-Wischartikel nach den Ansprüchen 6, 7 oder 8, **dadurch gekennzeichnet, daß** wenigstens einige der Rücken Verzweigungen aufweisen, die sich in unterschiedliche Richtungen erstrecken.

## Revendications

1. Article d'essuyage jetable (20) comprenant une surface macroscopiquement tridimensionnelle vers l'extérieur, ayant un agencement non répétitif aléatoire de crêtes et de creux, **caractérisé en ce que** la surface macroscopiquement tridimensionnelle a un indice de topographie de surface d'au moins environ 0,10, de préférence d'au moins environ 0,20.

2. Article d'essuyage selon la revendication 1, dans lequel la surface macroscopiquement tridimensionnelle est **caractérisée par** un différentiel de hauteur moyen d'au moins environ 0,5 mm.

3. Article d'essuyage selon la revendication 1 ou 2, dans lequel la surface macroscopiquement tridimensionnelle est **caractérisée par** une distance crête à crête moyenne d'au moins environ 2,0 mm.

4. Article d'essuyage selon la revendication 1, 2 ou 3, dans lequel l'article d'essuyage est **caractérisé par** une première couche et une deuxième couche réunie à la première couche, dans lequel la deuxième couche fronce la première couche pour fournir à la première couche une surface macroscopiquement tridimensionnelle vers l'extérieur, comprenant un agencement non répétitif, aléatoire de crêtes et de creux.

5. Article d'essuyage selon la revendication 1, 2, 3 ou 4, **caractérisé par** une première couche et une deuxième couche, la deuxième couche comprenant un agencement en filet de filaments, les filaments s'étendant entre des intersections de filaments, et dans lequel la première couche est reliée à la deuxième couche et dans lequel la première couche a une surface macroscopiquement tridimensionnelle vers l'extérieur, comprenant un agencement non répétitif, aléatoire de crêtes et de creux.

6. Article d'essuyage jetable selon la revendication 5, **caractérisé en ce que** la première couche est reliée par intermittence à la deuxième couche, et dans lequel des parties des filaments entre les intersections de filaments ne sont pas reliées à la première couche.

7. Article d'essuyage jetable selon la revendication 6, **caractérisé par le fait que** les crêtes et les creux de la première couche fournissent des arêtes douces, élevées, allongées, et dans lequel au moins certaines des arêtes s'étendent de part et d'autre d'au moins un filament de la deuxième couche.

8. Article d'essuyage jetable selon la revendication 7, **caractérisé en ce qu'**au moins certaines des arêtes ont une longueur supérieure à la distance maximale entre les intersections de filaments adjacentes.

9. Article d'essuyage jetable selon la revendication 6 ou 7, **caractérisé en ce qu'**au moins certaines des arêtes s'étendent dans une direction différente d'au moins certaines des autres arêtes.

10. Article d'essuyage jetable selon la revendication 6, 7 ou 8, **caractérisé par le fait qu'**au moins certaines des arêtes comportent des branches s'étendant dans des directions différentes.
